# EUROPEAN PATENT SPECIFICATION

(11) **EP 3 962 332 B1**
(45) Date of publication and mention of the grant of the patent: **07.10.2026**
(21) Application number: 19927201.4
(22) Date of filing: 29.05.2019
(51) Int. Cl.: A47J 42/22, A47J 42/32, B02C 18/00, A47J 42/30

(54) **A GRINDER**
SCHLEIFMASCHINE
MOULIN

(30) Priority: 02.05.2019 TR 201906548
(43) Date of publication of application: 09.03.2022
(73) Proprietor: Arzum Elektrikli Ev Aletleri San. Ve Tic. A.S., 34050 Eyüp/Istanbul (TR)
(72) Inventor: ATILLA, Ersoy, 34050 Eyüp/ Istanbul (TR)
(74) Representative: Isikli, Irfan Can
(86) International application number: PCT/TR2019/050393
(87) International publication number: WO 2020/222707

(56) References cited:
- WO-A1-2007/135728
- CN-U- 208 388 427
- CN-U- 208 590 890
- FR-A- 1 123 759
- JP-A- H04 348 722
- JP-A- S59 135 030
- US-A- 3 191 873

## Description

### Technical Field

The present invention relates to a grinder for grinding grindable materials, especially coffee beans inside of it.

### Background of the Invention

Coffee beans which are especially used for preparing hot drinks are ground in order to be reduced to a desired particle size. Additionally, since spices such as turmeric, cumin and black pepper are used in powdered form, these too are ground and reduced to powder. Especially after grinding coffee beans, a small difference in the sizes of the resultant particles is desired. Otherwise, when consumers are drinking a Turkish coffee prepared with such ground coffee, they feel the particles having large sizes. Therefore, a grinder, which enables the ground end-product to have a size smaller than a predetermined particle size, is needed.

In the state of the art, the grinding operation is realized by grinders having grindstones. The sizes of the particles emanated from the grinder could be adjusted by bringing the grindstones closer to each other or moving them away from each other. However, especially when the desired particle size for the ground material is too small, as in the Turkish coffee, the said grindstones contact each other, and this causes the grindstones to heat up, and roast the ground material. Therefore, a grinder which does not cause the materials being grinded to burn or roast during the grinding process, is needed.

The Japanese patent document numbered JP2001198024 (A**) i**n the background of the invention discloses a coffee machine. Blades which are present inside the said grinder enable grinding the coffee beans. However, the said document does not give an explanation on how the particles bigger than a preferred size are separated.

Among the grinders in the state of the art, no grinder, which enables the ground end-product to have a size smaller than a predetermined particle size, which does not cause the ground material to burn or to be roasted, is encountered. However, such a grinder is needed.

The United States patent document numbered US3191873A in the background of the invention discloses an electrically driven coffee mill. The coffee mill has a sieve. The sieve surrounds a motor and the beater knife. The sieve is surrounded by a cup-shaped catching receptacle. The ground coffee leaves the sieve and builds up in between the sieve and the receptacle. However, the coffee mill does not utilize any means for transferring the ground coffee out of the receptacle. Therefore, the ground coffee needs to be manually taken out of the receptacle. This renders the coffee mill unusable in an automatic coffee drink preparation environment.

### Short Description of the Invention

The object of the invention is to realize a grinder for grinding grindable materials, especially coffee beans inside of it.

Another object of the invention is to realize a grinder which enables the ground end-product to have a size smaller than a predetermined particle size.

Yet another object of the invention is to realize a grinder which is able to grind the materials without burning or roasting them.

Yet another object of the invention is to realize a grinder which is able to grind the materials homogenously.

### Detailed Description of the Invention

The grinder in order to fulfill the objects of the present invention is illustrated in the attached figures, where:

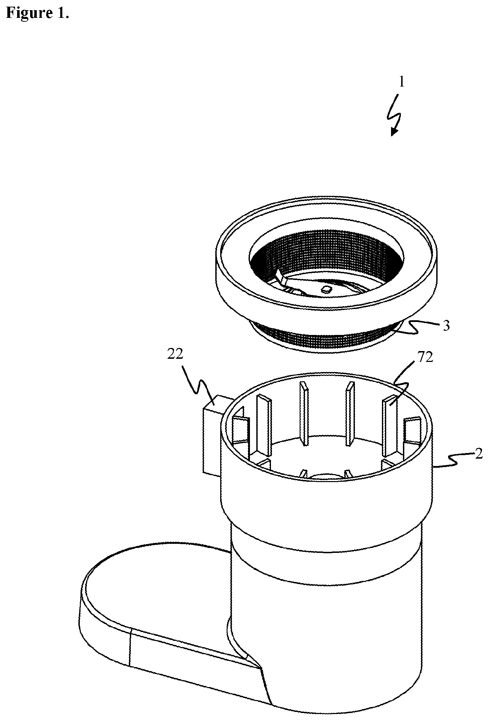

- **Figure 1.**: Exploded view of an embodiment of the inventive grinder
- **Figure 2.**: Sectional view of an embodiment of the inventive grinder together with a dosing means and a secondary container

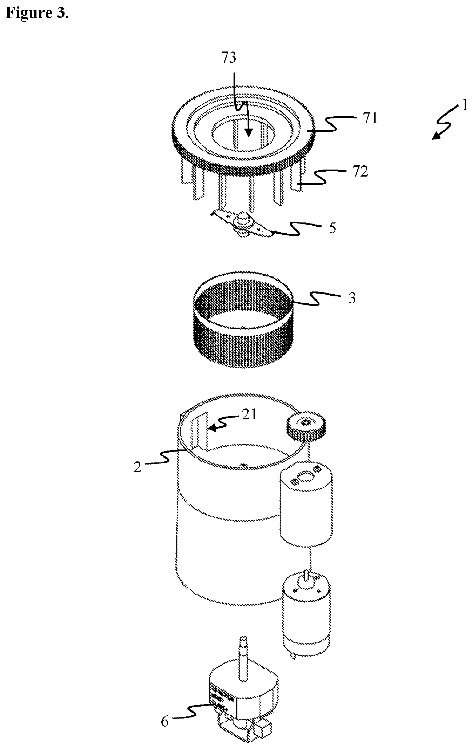

- **Figure 3.**: Exploded view of another embodiment of the inventive grinder

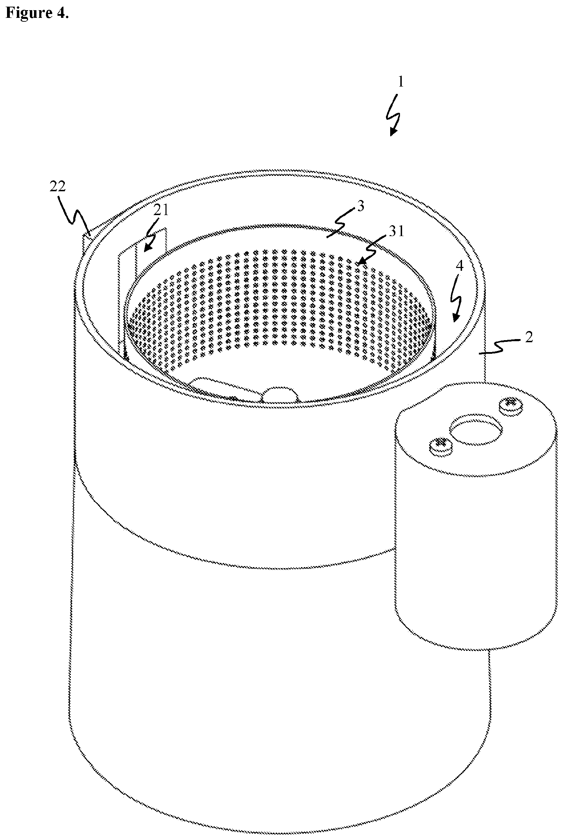

- **Figure 4.**: Close up view of the receptacle and the sieve

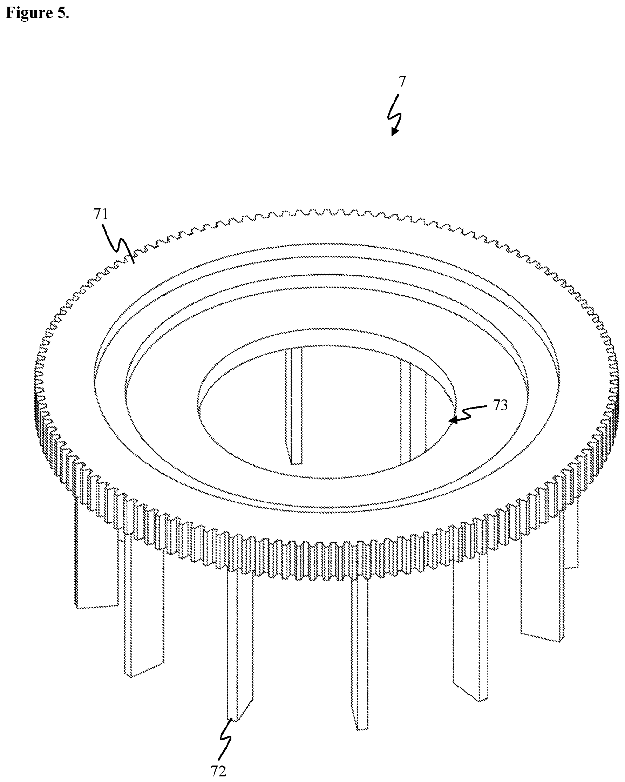

- **Figure 5.**: View of the sweeper in an embodiment of the invention.

Elements shown in the figures are individually numbered, and the correspondence of these numbers are given as follows:
- **1.**: Grinder
- **2.**: Receptacle
**21.** Outlet
**22.** Guide
- **3.**: Sieve
**31.** Pore
- **4.**: Gap
- **5.**: Blade
- **6.**: Driving unit
- **7.**: Sweeper
**71.** Body
**72.** Fin
**73.** Aperture
- **C.**: Secondary container
- **D.**: **D.** External component

The grinder (1) for grinding grindable materials, especially coffee beans inside of it essentially comprises;
- at least one receptacle (2) having at least one side wall and at least one base, and at least one opening for placing materials inside the receptacle (2),
- at least one sieve (3) which is suitable for being placed inside the receptacle (2), which has at least one side wall comprising at least one pore (31), at least one opening for placing materials inside the sieve (3),
- at least one blade (5) for grinding the materials inside the sieve (3),
- at least one driving unit (6) for driving at least the blade (5) thereby rotating it, and
- at least one gap (4) which, in the state when the sieve (3) is placed inside the receptacle (2), is located between the side wall of the sieve (3) and the side wall of the receptacle (2), and which is suitable for the ground material to build up inside,
- the receptacle having at least one outlet in order to facilitate the ground material which has built up in the gap to be taken out of the gap and
- at least one sweeper for directing the material which is built up in the gap to the outlet, said sweeper comprising at least one body and at least one fin which extends in vertical direction or at an angle with the vertical direction from the body towards the gap.

The grinder (1) for grinding grindable materials, especially coffee beans inside of it essentially comprises at least one receptacle (2) having at least one side wall and at least one base, and at least one opening on it for placing materials inside the receptacle (2). At least one sieve (3) is present inside the receptacle (2). The sieve (3) comprises at least one side wall and at least one pore (31) is present on the said side. When the sieve (3) is placed inside the receptacle (2), a gap (4) remains between the side wall of the sieve (3) and the side wall of the receptacle (2). In other words, the sieve (3) is placed inside the receptacle (2) such that a gap (4) remains between the side wall of the sieve (3) and the side wall of the receptacle (2). At least one blade (5) is present inside the sieve (3) for grinding the materials, such as coffee beans, taken inside the sieve (3). The blade (5) rotates and collides with the materials inside the sieve (3), and thus, breaks down these materials into smaller chunks. Said blade (5) is rotated via a driving unit (6) such as an electric motor or rotating lever. When the materials crushed by the blade (5) reach the size of the pores (31) on the sieve (3) or a smaller size thereof, they exit from the sieve (3) through the pores (31) and reach the gap (4) between the side wall of the sieve (3) and the side wall of the receptacle (2). The particles having a smaller size than the pores (31) of the sieve (3) build up in the said gap (4). In this embodiment, by using sieves (3) with pores (31) having smaller and bigger sizes, the size of the ground material could be changed.

The pores (31) on the sieve (3) might have any shape or multiple shapes. Said pores (31), for example, might have any regular or irregular geometric shape such as circle, triangle, square, rectangle, pentagon and so forth.

There might be one or multiple blades (5) present. Additionally, the blades (5) might be of and length and shape.

In an embodiment of the invention, the sieve (3) comprises at least two pores (31) where at least two of the pores (31) have different sizes. By the virtue of different pore (31) sizes, a material ground in more than one size could be obtained. Especially in materials such as coffee, the grinding size affects the taste and flavor of the end-product. By the virtue of different pore (31) sizes, the material could be ground in sizes such that it has the desired taste and flavor characteristics. In this embodiment, parameters such as the number of different sizes of the pores (31), the number of pores (31) having different sizes, the ratio of the number of said pores (31) and the placement of said pores (31) could be changed according to the desired characteristics of the end-product. For example, when it is desired that finer ground coffee to be predominant, the ratio of smaller pores (31) to bigger pores (31) could be 3:1. This ratio is merely an example.

In an embodiment of the invention, the user could extract the material which has built up in the gap (4) by rotating the receptacle (2).

According to the invention, the receptacle (2) comprises at least one outlet (21) in order to facilitate the ground material which has built up in the gap (4) to be taken out of the gap (4). Preferably, at least one guide (22) is connected to the said outlet (21) in order to guide the particles coming out of the said outlet (21). Said guide (22) could be connected to the outlet (21) such that it may lie in any direction.

According to the invention, the inventive grinder (1) comprises at least one sweeper (7) in order to direct the ground material which is built up in the gap (4) towards the outlet (21). Said sweeper (7) comprises at least one body (71) and at least one fin (72) which extends in vertical direction or at an angle with the vertical direction from the body (71) towards the gap (4). The fin (72) is movable inside the gap (4). The sweeper (7) is moved via a driving unit (6). As the fin (72) moves inside the gap (4), the ground material which is built up in the gap (4) also moves. When the material reaches the outlet (21), it moves out through the outlet (21). Said driving unit (6) might be the same driving unit (6) which drives the blade (5), or it might be another driving unit (6). The sweeper (7) might comprise teeth or a groove on its body (71) in order to facilitate its driving. By this way, the sweeper (7) might be driven via a means such as a gear or a belt. By the virtue of the rotating motion of the sweeper (7), the fins (72) hit the particles which are built up in the gap (4) and direct them towards the outlet (21). Additionally, the said rotating motion generates an air current inside the receptacle (2), and this air current forces the particles to exit through the outlet (21).

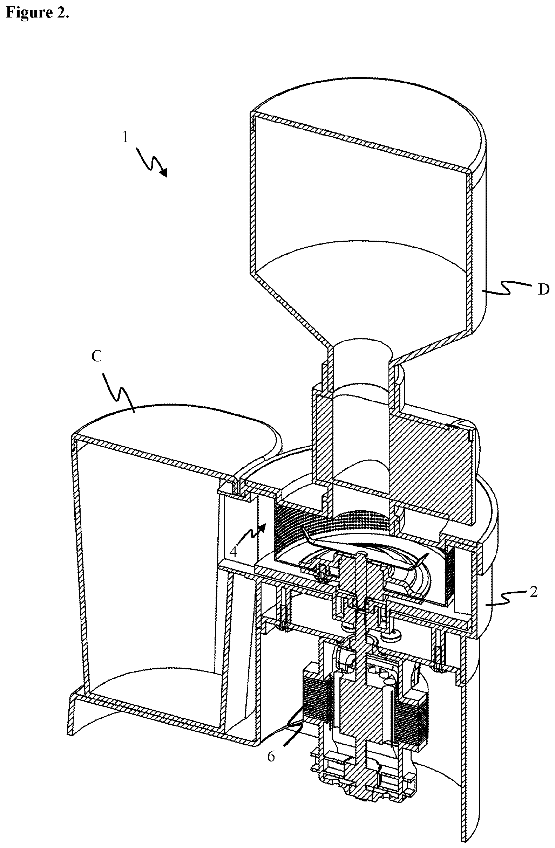

In an embodiment of the invention, the sweeper (7) is placed over the receptacle (2) and the sieve (3). In this embodiment, the body (71) of the sweeper (7) covers the top part of the receptacle (2) and the sieve (3). The fins (72) extend inside the gap (4), from top to bottom, perpendicular to the body (71) or in an angled manner. Said fins (72) might, as well, angled with respect to the radial direction of the axis about which they revolve. In this embodiment (Figure 2), the sweeper (7) comprises at least one aperture (73) on its body (71) enabling the materials to be milled to be introduced into the sieve (3). The materials introduced through this aperture (73) reach inside the sieve (3) and they are crushed here by the blades (5). In order to prevent the material from being scattered from this aperture (73) while the inventive grinder is being utilized, the said aperture (73) might be closed by a cover.

Alternatively, an external component (D) such as a dosing means, or a coffee container could be connected to the said aperture (73). As the said external component (D) covers the said aperture (73), no material could scatter from this aperture (73) while the inventive grinder is being utilized.

In the inventive grinder (1), the sweeper (7) could be placed on the base or the ceiling of the receptacle (2). When the sweeper (7) is placed on the base of the receptacle (2), the ceiling of the receptacle (2) might, at least partially, be closed with a cover.

In the inventive grinder (1), the sweeper (7) might be rotated at various desired speeds. The rotating speed of the sweeper (7) might be changed using a gear or gears between the driving unit (6) and the sweeper (7), by using driving units (6) having different rotating speeds, by changing the supply voltage of the driving unit (6) or by changing a driving signal which enables the driving unit (6) to rotate. In the embodiment where the sweeper (7) and the blades (5) are driven via the same driving unit (6), the blades (5) and the sweeper (7) might have different rotating speeds.

By the virtue of the inventive grinder (1), the materials introduced into the sieve (3) are ground by the blades (5), and the particles having a smaller size than a desired size pass to the gap (4) through the pores (31) on the sieve (3). By this way, the particles having the desired size are prevented from being heated up by contacting the blades (5). Additionally, since only the particles having smaller sizes than the pores (31) of the sieve (3), the ground material have similar particle sizes, in other words, the particle sizes are homogenous. By this way, the inventive grinder (1) is suitable for grinding the materials which are needed to be ground finely and homogenously, such as Turkish coffee.

The materials evacuated from the outlet (21) might be collected in a secondary container (C) placed at the outlet (21). Said secondary container (C) might be a storing container for storing the ground coffee or a cooking chamber for cooking the ground coffee.

The inventive grinder (1) could be mounted to a machine, and especially to a Turkish coffee machine. By this way, the users could prepare their coffee drinks using freshly ground coffee.

## Claims

1. A grinder (1) for grinding grindable materials, especially coffee beans inside of it comprising;
- at least one receptacle (2) having at least one side wall and at least one base, and at least one opening for placing materials inside the receptacle (2),
- at least one sieve (3) suitable to be placed inside the receptacle (2) having at least one side wall comprising at least one pore (31) and at least one opening for placing materials inside the sieve (3),at least one blade (5) for grinding the materials inside the sieve (3),
- at least one driving unit (6) for driving at least the blade (5) thereby rotating it,
- at least one gap (4) which, in the state when the sieve (3) is placed inside the receptacle (2), is located between the side wall of the sieve (3) and the side wall of the receptacle (2), and which is suitable for the ground material to build up inside, **characterized by**
- the receptacle (2) having at least one outlet (21) in order to facilitate the ground material which has built up in the gap (4) to be taken out of the gap (4),
- at least one sweeper (7) for directing the material which is built up in the gap (4) to the outlet (21), said sweeper (7) comprising at least one body (71) and at least one fin (72) which extends in vertical direction or at an angle with the vertical direction from the body (71) towards the gap (4).

2. A grinder (1) as in Claim 1 wherein the sieve (3) comprises pores (31) with regular or irregular, one or multiple geometric shapes.

3. A grinder (1) as in Claim 2 wherein the sieve (3) comprises at least two pores (31) where at least two of the pores (31) have different sizes.

4. A grinder (1) as in Claim 1 comprising at least one guide (22) which is connected to the outlet (21) in order to guide the particles coming out of the said outlet (21).

5. A grinder (1) as in Claim 1 wherein the sweeper (7) comprises at least one fin (72) which is angled with respect to the radial direction of the axis about which it revolves.

6. A grinder (1) as in Claim 1 wherein the sweeper (7) comprises at least one aperture (73) on its body (71) enabling the materials to be milled to be introduced into the sieve (3).

7. A grinder (1) as in Claim 6 wherein the sweeper (7) comprises at least one aperture (73) suitable for an external component (D) to be connected to.

8. A coffee machine for preparing coffee drink **characterized in that** it comprises a grinder (1) according to any of the Claims 1-7.

## Patentansprüche

1. Eine Mahlvorrichtung (1) zum Mahlen von mahlfähigen Materialien und insbesondere von Kaffeebohnen umfassend;
- mindestens einen Behälter (2) mit mindestens einer Seitenwand und mindestens einem Boden und mindestens einer Öffnung zum Einbringen von Materialien in den Behälter (2),
- mindestens ein Sieb (3), das sich zum Einsetzen in den Behälter (2) eignet, mit mindestens einer Seitenwand, die mindestens eine Sieböffnung (31) aufweist, und mindestens einer Öffnung zum Einbringen von Materialien in das Sieb (3),
- mindestens ein Messer (5) zum Mahlen der Materialien innerhalb des Siebs (3),
- mindestens eine Antriebsvorrichtung (6) zum Antreiben zumindest des Messers (5), wodurch dieses gedreht wird,
- mindestens einen Zwischenraum (4), der, wenn das Sieb (3) in den Behälter (2) eingesetzt ist, zwischen der Seitenwand des Siebs (3) und der Seitenwand des Behälters (2) angeordnet ist und sich dazu eignet, dass sich das gemahlene Material darin ansammelt, **dadurch gekennzeichnet, dass**
- der Behälter (2) mindestens einen Auslass (21) aufweist, um das Herausnehmen des im Zwischenraum (4) angesammelten gemahlenen Materials aus dem Zwischenraum (4) zu erleichtern,
- mindestens ein Abstreifer (7) zum Führen des im Zwischenraum (4) angesammelten Materials zum Auslass (21) vorgesehen ist, wobei der Abstreifer (7) mindestens ein Gehäuse (71) und mindestens einen Flügel (72) aufweist, der sich vom Gehäuse (71) in vertikaler Richtung oder schräg zur vertikalen Richtung vom Gehäuse (71) in Richtung des Zwischenraums (4) erstreckt.

2. Mahlvorrichtung (1) nach Anspruch 1, umfassend ein Sieb (3) mit einer oder mehreren Sieböffnungen (31) in einer oder mehreren regelmäßigen oder unregelmäßigen geometrischen Formen.

3. Mahlvorrichtung (1) nach Anspruch 2, umfassend ein Sieb (3) mit mindestens zwei Sieböffnungen (31), von denen mindestens zwei über unterschiedliche Abmessungen verfügen.

4. Mahlvorrichtung (1) nach Anspruch 1, umfassend mindestens eine Führung (22), die mit dem Auslass (21) verbunden ist und sich dazu eignet, die aus dem Auslass (21) austretenden Partikel zu führen.

5. Mahlvorrichtung (1) nach Anspruch 1, umfassend mindestens einen Abstreifer (7), der mindestens einen Flügel (72) aufweist, der gegenüber der radialen Richtung der Achse, um die er sich dreht, geneigt ist.

6. Mahlvorrichtung (1) nach Anspruch 1, umfassend mindestens einen Abstreifer (7), dessen Gehäuse (71) mindestens eine Öffnung (73) aufweist, durch die das zu mahlende Material in das Sieb (3) eingebracht werden kann.

7. Mahlvorrichtung (1) nach Anspruch 6, umfassend mindestens einen Abstreifer (7) mit mindestens einer Öffnung (73), die zum Anschließen einer externen Komponente (D) geeignet ist.

8. Kaffeemaschine zur Zubereitung eines Kaffeegetränks, **dadurch gekennzeichnet, dass** sie eine Mahlvorrichtung (1) nach einem der Ansprüche 1 bis 7 aufweist.

## Revendications

1. Un broyeur (1) pour moudre des matières pouvant être moulues, et en particulier des grains de café, comprenant :
- au moins une cuve (2) comportant au moins une paroi latérale et au moins un fond, et au moins une ouverture permettant d'introduire des matières dans la cuve (2),
- au moins un tamis (3) adapté à être placé à l'intérieur de la cuve (2), comportant au moins une paroi latérale comprenant au moins un pore (31) et au moins une ouverture permettant d'introduire des matières dans le tamis (3),
- au moins une lame (5) destinée à broyer les matières se trouvant à l'intérieur du tamis (3),
- au moins un dispositif d'entraînement (6) destiné à entraîner au moins la lame (5) de manière à la faire tourner,
- au moins un vide (4) qui, lorsque le tamis (3) est placé à l'intérieur de la cuve (2), est situé entre la paroi latérale du tamis (3) et la paroi latérale de la cuve (2), et qui est adapté à permettre à la matière broyée de s'y accumuler, **caractérisé par**
- la cuve (2) comportant au moins une sortie (21) afin de faciliter l'évacuation, hors du vide (4), de la matière broyée qui s'est accumulée dans le vide (4),
- au moins un balayeur (7) destiné à diriger vers la sortie (21) la matière qui s'est accumulée dans le vide (4), ledit balayeur (7) comprenant au moins un corps (71) et au moins une ailette (72) qui s'étend depuis le corps (71) vers le vide (4) dans une direction verticale ou selon un angle par rapport à la direction verticale.

2. Un broyeur (1) tel que décrit dans la revendication 1, dans lequel le tamis (3) comprend des pores (31) présentant une ou plusieurs formes géométriques régulières ou irrégulières.

3. Un broyeur (1) tel que décrit dans la revendication 2, comprenant un tamis (3) comportant au moins deux pores (31) dont au moins deux ont des dimensions différentes.

4. Un broyeur (1) tel que décrit dans la revendication 1, comprenant au moins un guide (22) relié à la sortie (21) et permettant de diriger les particules sortant de cette sortie (21).

5. Un broyeur (1) tel que décrit dans la revendication 1, dans lequel le balayeur (7) comprend au moins une ailette (72) qui est inclinée par rapport à la direction radiale de l'axe autour duquel il tourne.

6. Un broyeur (1) tel que décrit dans la revendication 1, dans lequel le balayeur (7) comprend au moins une ouverture (73) sur son corps (71), permettant d'introduire les matières à broyer dans le tamis (3).

7. Un broyeur (1) tel que décrit dans la revendication 6, dans lequel le balayeur (7) comprend au moins une ouverture (73) apte à permettre le raccordement d'un composant externe (D).

8. Une machine à café destinée à préparer une boisson à base de café, **caractérisée en ce qu'**elle comprend un broyeur (1) selon l'une quelconque des revendications 1 à 7.
